(19) Europäisches Patentamt
European Patent Office
Office européen des brevets

(11) **EP 1 964 709 A1**

(12) **EUROPEAN PATENT APPLICATION**
published in accordance with Art. 158(3) EPC


(43) Date of publication:
**03.09.2008 Bulletin 2008/36**

(21) Application number: **06834938.0**

(22) Date of filing: **19.12.2006**

(51) Int Cl.:
***B60L 11/14*** *(2006.01)* ***B60W 10/06*** *(2006.01)*
***B60W 10/08*** *(2006.01)* ***B60W 10/26*** *(2006.01)*
***B60W 20/00*** *(2006.01)* ***F02D 29/02*** *(2006.01)*
***F02D 41/04*** *(2006.01)*

(86) International application number:
**PCT/JP2006/325228**

(87) International publication number:
**WO 2007/072797 (28.06.2007 Gazette 2007/26)**

(84) Designated Contracting States:
**DE FR GB**

(30) Priority: **19.12.2005 JP 2005365433**



(71) Applicant: **TOYOTA JIDOSHA KABUSHIKI KAISHA**
**Toyota-shi,**
**Aichi 471-8571 (JP)**

(72) Inventors:
- **ANDO, Daigo**
  **Toyota-shi, Aichi 471-8571 (JP)**
- **ABE, Tsukasa**
  **Toyota-shi, Aichi 471-8571 (JP)**
- **TOMATSURI, Mamoru**
  **Toyota-shi, Aichi 471-8571 (JP)**
- **INOUE, Toshio**
  **Toyota-shi, Aichi 471-8571 (JP)**
- **FUSHIKI, Shunsuke**
  **Toyota-shi, Aichi 471-8571 (JP)**
- **HASEGAWA, Keiko**
  **Toyota-shi, Aichi 471-8571 (JP)**
- **FUKUI, Keita**
  **Toyota-shi, Aichi 471-8571 (JP)**

(74) Representative: **TBK-Patent**
**Bavariaring 4-6**
**80336 München (DE)**


(54) **POWER OUTPUT DEVICE AND ITS CONTROL METHOD AND VEHICLE**


(57) When an engine power demand Pe* is not greater than a maximum power Pemax, the drive control sets a target rotation speed Ne* and a target torque Te* of an engine according to a reference operation curve obtained in air-fuel ratio control with a stoichiometric air-fuel ratio (step S125). When the engine power demand Pe* exceeds the maximum power Pemax, on the other hand, upon failure of a preset fuel increase prohibition condition, the drive control sets the target rotation speed Ne* to a maximum rotation speed Nemax (step S140) and sets a target air-fuel ratio used for the air-fuel ratio control of the engine to a rich air-fuel ratio based on the engine power demand Pe* (step S150).


FIG.3

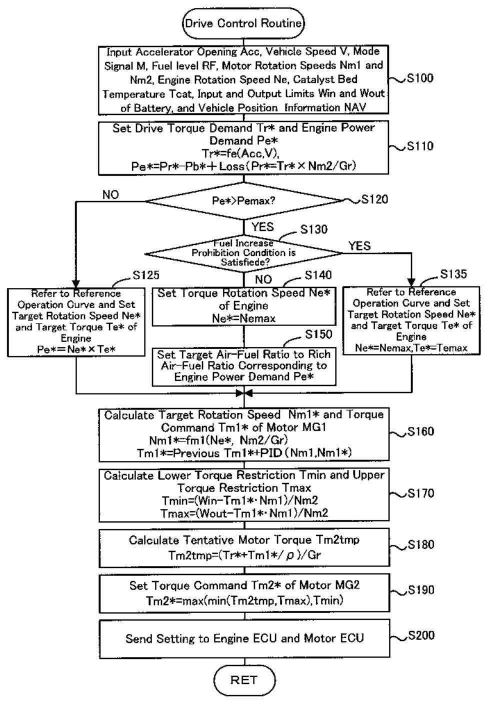


EP 1 964 709 A1

## Description

Technical Field

The present invention relates to a power output apparatus, a control method of the power output apparatus, and a vehicle equipped with the power output apparatus.

Background Art

One proposed structure of a power output apparatus for outputting power to a driveshaft disclosed in Patent Document 1 includes an engine and a motor as the driving power source and drives and rotates a generator to charge a battery during output of power from the engine as the driving power source. This power output apparatus of Patent Document 1 is provided with an output increase mechanism having a better response than a conventional throttle valve. In response to an increase of the driver's power requirement, this output increase mechanism works to promptly increase an engine torque and thereby ensure sufficient power output, while keeping a rotation speed of the engine unchanged. Examples of the power output apparatus given in Patent Document 1 are a variable valve timing mechanism, a D4 lean burn controller, a power increase controller, and a turbocharger.

It is generally preferable to set a driving point of the engine for ensuring output of an engine power demand according to a fuel consumption-oriented reference operation curve and drive the engine at the set driving point. In response to the increase of the driver's power requirement, the proposed power output apparatus of Patent Document 1 drives the engine at a driving point temporarily out of the reference operation curve with giving preference to a quick response to the driver's requirement.

Patent Document 1: Japanese Patent Laid-Open No. 2001-112115

Disclosure of the Invention

This prior art power output apparatus disclosed in Patent Document 1, however, does not specifically consider the control of the engine under the condition that the rotation speed of the engine reaches a maximum rotation speed set according to some regulation. After the rotation speed of the engine reaches the maximum rotation speed, in the event of a gradual increase of the engine power demand, for example, accompanied with an increase in charging power, the driving point of the engine is required to change to a driving point of the higher rotation speed according to the reference operation curve. Since the rotation speed of the engine can not exceed the maximum rotation speed, however, the driving point of the engine is not changeable. The output power of the engine accordingly does not satisfy the engine power demand.

According to some aspects of the invention, in the power output apparatus, the control method of the power output apparatus, and the vehicle equipped with the power output apparatus, it would be desirable to adequately respond to a gradual increase in power demand required for an internal combustion engine even after a rotation speed of the internal combustion engine reaches a preset maximum rotation speed. It would also be desirable to ensure such a response while effectively preventing overcharge of the accumulator unit.

The present invention accomplishes the requirements mentioned above by the following configurations applied to the power output apparatus, the control method of the power output apparatus, and the vehicle equipped with the power output apparatus.

One aspect of the invention pertains to a power output apparatus that outputs power to a driveshaft. The power output apparatus includes:

an internal combustion engine;
an electric power-mechanical power input output structure that is connected to an output shaft of the internal combustion engine and to the driveshaft and outputs at least part of output power of the internal combustion engine to the driveshaft through input and output of electric power and mechanical power;
a motor that inputs and outputs power to and from the driveshaft;
an accumulator unit that transmits electric power from and to the electric power-mechanical power input output structure and the motor;
a driveshaft power demand setting module that sets a driveshaft power demand required for the driveshaft;
an internal combustion engine power demand setting module that sets an internal combustion engine power demand required for the internal combustion engine, based on a state of the accumulator and the set driveshaft power demand; and
a controller that, when a rotation speed of the internal combustion engine reaches a preset maximum rotation speed and when the set internal combustion engine power demand exceeds a predetermined maximum power, sets a fuel increase parameter based on the set internal combustion engine power demand and controls the internal combustion engine, the electric power-mechanical power input output structure, and the motor to inject an amount of fuel corresponding to the set fuel increase parameter and to output a power to the driveshaft according to the set driveshaft power demand while keeping the rotation speed of the internal combustion engine unchanged, where the maximum power represents a highest possible power output from the internal combustion engine and is determined according to the maximum rotation speed and a reference operation curve obtained in air-fuel ratio control with an air-fuel ratio equal to or close to a stoichiometric air-fuel ratio.

When the rotation speed of the internal combustion engine reaches the preset maximum rotation speed and when the set internal combustion engine power demand exceeds the predetermined maximum power of the internal combustion engine determined according to the maximum rotation speed and the reference operation curve obtained in the air-fuel ratio control with the air-fuel ratio equal to or close to the stoichiometric air-fuel ratio, the power output apparatus according to this aspect of the invention sets the fuel increase parameter based on the set internal combustion engine power demand and controls the internal combustion engine, the electric power-mechanical power input output structure, and the motor to inject the amount of fuel corresponding to the set fuel increase parameter and to output the power to the driveshaft according to the set driveshaft power demand while keeping the rotation speed of the internal combustion engine unchanged. Once the rotation speed of the internal combustion engine reaches the preset maximum rotation speed, it is not allowed to change the driving point of the internal combustion engine to a driving point of a higher rotation speed along the reference operation curve in response to a gradual increase in internal combustion engine power demand. The power output apparatus according to this aspect of the invention thus increases the output power of the internal combustion engine by increasing the amount of fuel corresponding to the set internal combustion engine power demand. This arrangement ensures the adequate response to the gradual increase of the power demand required for the internal combustion engine even after the rotation speed of the internal combustion engine reaches the preset rotation speed.

In one preferable application of the power output apparatus according to one aspect of the invention, the maximum rotation speed is determined according to a noise level, which depends upon operation of the internal combustion engine. This arrangement ensures the required increase of the output power of the internal combustion engine, while adequately restricting the noise level depending upon the operation of the internal combustion engine. The maximum rotation speed of the internal combustion engine may be determined according to other factors, for example, by taking into account the performance and the life of the internal combustion engine as well as the conditions of the electric power-mechanical power input output structure, the motor, and the accumulator unit.

In one preferable embodiment of the power output apparatus according to the above aspect of the invention, in the case of a requirement for increasing the amount of fuel after the rotation speed of the internal combustion engine reaches the preset maximum rotation speed, the controller increases the amount of fuel to a specific extent of not exceeding a maximum value of the internal combustion engine power demand set according to an input limit of the accumulator. This arrangement effectively prevents overcharge of the accumulator unit, while ensuring the adequate response to the increase of the power demand required for the internal combustion engine even after the rotation speed of the internal combustion engine reaches the preset maximum rotation speed.

In another preferable embodiment of the power output apparatus according to the above aspect of the invention, the controller does not increase the amount of fuel upon satisfaction of a preset fuel increase prohibition condition, even when the rotation speed of the internal combustion engine reaches the preset maximum rotation speed and when the set internal combustion engine power demand exceeds the predetermined maximum power. Upon satisfaction of the preset fuel increase prohibition condition, the internal combustion engine is driven at the driving point on the reference operation curve. This ensures the high emission and the high fuel consumption.

It is preferable that the preset fuel increase prohibition condition is at least one condition selected among a condition that a fuel consumption priority mode is set, a condition that the power output apparatus is driven in a specific district, a condition that a fuel level is in a specific low level range, and a condition that temperature of an emission control catalyst located in an exhaust pathway of the internal combustion engine is lower than a preset catalyst activation temperature. In the setting of the fuel consumption priority mode, it is desirable to prohibit the increase of the amount of fuel because of the driver's preference to the fuel consumption over the power performance. While the power output apparatus is driven in the specific district (for example, in an urban district or in a residential district), it is desirable to prohibit the increase of the amount of fuel, in order to prevent the environmental load from being heightened by the emission. At the fuel level in the specific low level range (for example, in the range of turning on a fuel level indicator), it is desirable to prohibit the increase of the amount of fuel, in order to extend the traveling distance with the remaining fuel. At the temperature of the emission control catalyst lower than the preset activation temperature of the catalyst, it is desirable to prohibit the increase of the amount of fuel since the rich content of the fuel-derived component may cause insufficient emission control.

In one preferable application of the power output apparatus according to the above aspect of the invention, the electric power-mechanical power input output structure has: a three shaft-type power input output mechanism that is linked to three shafts, the output shaft of the internal combustion engine, the driveshaft, and a rotating shaft, and inputs and outputs power from and to a residual one shaft based on powers input from and output to any two shafts among the three shafts; and a generator that inputs and outputs power from and to the rotating shaft.

Another aspect of the invention pertains to a vehicle equipped with the power output apparatus that has any of the arrangements described above and basically outputs power to a driveshaft. This vehicle is equipped with the power output apparatus having any of the applications described above. The vehicle according to this aspect of the invention thus possesses the advantages similar to those of the power output apparatus described above, for example, the advantage of adequately responding to a gradual increase of the power demand required for the internal combustion engine even after the rotation speed of the internal combustion engine reaches the preset maximum rotation speed.

Still another aspect of the invention is directed to a control method of a power output apparatus. The power output apparatus has: an internal combustion engine; an electric power-mechanical power input output structure that is connected to an output shaft of the internal combustion engine and to a driveshaft and outputs at least part of output power of the internal combustion engine to the driveshaft through input and output of electric power and mechanical power; a motor that inputs and outputs power to and from the driveshaft; and an accumulator unit that transmits electric power from and to the electric power-mechanical power input output structure and the motor. The control method includes:

(a) setting a driveshaft power demand required for the driveshaft,
(b) setting an internal combustion engine power demand required for the internal combustion engine, based on a state of the accumulator and the set driveshaft power demand, and
(c) when a rotation speed of the internal combustion engine reaches a preset maximum rotation speed and when the set internal combustion engine power demand exceeds a predetermined maximum power, setting a fuel increase parameter based on the set internal combustion engine power demand and controlling the internal combustion engine, the electric power-mechanical power input output structure, and the motor to inject an amount of fuel corresponding to the set fuel increase parameter and to output a power to the driveshaft according to the set driveshaft power demand while keeping the rotation speed of the internal combustion engine unchanged. Here the maximum power represents a highest possible power output from the internal combustion engine and is determined according to the maximum rotation speed and a reference operation curve obtained in air-fuel ratio control with an air-fuel ratio equal to or close to a stoichiometric air-fuel ratio.

When the rotation speed of the internal combustion engine reaches the preset maximum rotation speed and when the set internal combustion engine power demand exceeds the predetermined maximum power of the internal combustion engine determined according to the maximum rotation speed and the reference operation curve obtained in the air-fuel ratio control with the air-fuel ratio equal to or close to the stoichiometric air-fuel ratio, the control method according to this aspect of the invention sets the fuel increase parameter based on the set internal combustion engine power demand and controls the internal combustion engine, the electric power-mechanical power input output structure, and the motor to inject the amount of fuel corresponding to the set fuel increase parameter and to output the power to the driveshaft according to the set driveshaft power demand while keeping the rotation speed of the internal combustion engine unchanged. Once the rotation speed of the internal combustion engine reaches the preset maximum rotation speed, it is not allowed to change the driving point of the internal combustion engine to a driving point of a higher rotation speed along the reference operation curve in response to a gradual increase in internal combustion engine power demand. The control method according to this aspect of the invention thus increases the output power of the internal combustion engine by increasing the amount of fuel corresponding to the set internal combustion engine power demand. This arrangement ensures the adequate response to the gradual increase of the power demand required for the internal combustion engine even after the rotation speed of the internal combustion engine reaches the preset rotation speed. The control method for the power output apparatus may have additional steps or operations to actualize any of the various functions in the power output apparatus described above.

Brief Description of the Drawings

Fig. 1 schematically illustrates the configuration of a hybrid vehicle 20 equipped with a power output apparatus in one embodiment of the invention;
Fig. 2 shows the schematic structure of an engine 22;
Fig. 3 is a flowchart showing a drive control routine executed by a hybrid electronic control unit 70;
Fig. 4 shows variations of an input limit Win and an output limit Wout against the battery temperature Tb of a battery 50;
Fig. 5 shows variations of an input limit correction factor and an output limit correction factor against the state of charge SOC of the battery 50;

Fig. 6 shows one example of a torque demand setting map;

Fig. 7 shows a reference operation curve of the engine 22 to set a target rotation speed Ne* and a target torque Te*;

Fig. 8 shows one example of a target air-fuel ratio setting map that is referred to when an engine power demand Pe* exceeds a maximum power Pemax;

Fig. 9 is an alignment chart showing torque-rotation speed dynamics of respective rotational elements included in a planetary gear mechanism 30;

Fig. 10 schematically illustrates the configuration of another hybrid vehicle 120 in one modified example; and

Fig. 11 schematically illustrates the configuration of still another hybrid vehicle 220 in another modified example.

Best Modes of Carrying Out the Invention

One mode of carrying out the invention is described below as a preferred embodiment with reference to the accompanied drawings.

Fig. 1 schematically illustrates the configuration of a hybrid vehicle 20 equipped with a power output apparatus in one embodiment of the invention. Fig. 2 shows the schematic structure of an engine 22 mounted on the hybrid vehicle 20. As illustrated, the hybrid vehicle 20 of the embodiment includes the engine 22, a planetary gear mechanism 30 having a carrier 34 that rotates a pinion gear 33 and is linked to a crankshaft 26 or an output shaft of the engine 22 via a damper 28, a motor MG1 that is linked to a sun gear 31 of the planetary gear mechanism 30 and has power generation capability, a motor MG2 that is linked via a reduction gear 35 to a ring gear shaft 32a or a driveshaft connecting with a ring gear 32 of the planetary gear mechanism 30, a navigation system 90 that searches for a route from the present position to a destination and guides the route, and a hybrid electronic control unit 70 that controls the operations of the whole hybrid vehicle 20. The ring gear shaft 32a or the driveshaft is linked to an axle 64 provided with drive wheels 63a and 63b via a power transmission gear 60 and a differential gear 62. The output power to the ring gear shaft 32a is used as the driving power of the hybrid vehicle 20.

The engine 22 is an internal combustion engine that consumes a hydrocarbon fuel, such as gasoline or light oil, to output power. As shown in Fig. 2, the air cleaned by an air cleaner 122 and taken into an air intake conduit via a throttle valve 124 is mixed with the atomized fuel injected from a fuel injection valve 126 to the air-fuel mixture. The air-fuel mixture is introduced into a combustion chamber 166 by means of an intake valve 128. The introduced air-fuel mixture is ignited with spark made by a spark plug 130 to be explosively combusted. The reciprocating motions of a piston 132 pressed down by the combustion energy are converted into rotational motions of the crankshaft 26. The exhaust from the engine 22 goes through a catalytic converter (three-way catalyst) 134 to convert toxic components included in the exhaust, that is, carbon monoxide (CO), hydrocarbons (HC), and nitrogen oxides (NOx), into harmless components, and is discharged to the outside air.

The engine 22 is under control of an engine electronic control unit (hereafter referred to as engine ECU) 24. The engine ECU 24 is constructed as a microprocessor including a CPU 24a, a ROM 24b that stores processing programs, a RAM 24c that temporarily stores data, input and output ports (not shown), and a communication port (not shown). The engine ECU 24 receives, via its input port, signals from various sensors that measure and detect the operating conditions of the engine 22. The signals input into the engine ECU 24 include a crank position from a crank position sensor 140 detected as the rotational position of the crankshaft 26, a cooling water temperature from a water temperature sensor 142 measured as the temperature of cooling water in the engine 22, a cam position from a cam position sensor 144 detected as the rotational position of a camshaft driven to open and close the intake valve 128 and an exhaust valve for gas intake and exhaust into and from the combustion chamber, a throttle valve position from a throttle valve position sensor 146 detected as the opening of the throttle valve 124, and a catalyst bed temperature Tcat from a catalyst bed temperature sensor 135 attached to a catalytic converter 134. The engine ECU 24 outputs, via its output port, diverse control signals and driving signals to drive and control the engine 22, for example, driving signals to the fuel injection valve 126, driving signals to a throttle valve motor 136 for regulating the position of the throttle valve 124, control signals to an ignition coil 138 integrated with an igniter, and control signals to a variable valve timing mechanism 150 to vary the open and close timings of the intake valve 128. The engine ECU 24 established communication with the hybrid electronic control unit 70 to drive and control the engine 22 in response to control signals received from the hybrid electronic control unit 70 and to output data regarding the operating conditions of the engine 22 to the hybrid electronic control unit 70 according to the requirements.

The motors MG1 and MG2 are constructed as known synchronous motor generators that may be actuated both as a generator and as a motor. The motors MG1 and MG2 transmit electric powers to and from a battery 50 via inverters 41 and 42. Both the motors MG1 and MG2 are driven and controlled by a motor electronic control unit (hereafter referred to as motor ECU) 40. The motor ECU 40 inputs signals required for driving and controlling the motors MG1 and MG2, for example, signals representing rotational positions of rotors in the motors MG1 and MG2 from rotational position detection sensors 43 and 44 and signals representing phase currents to be applied to the motors MG1 and MG2 from current sensors (not shown). The motor ECU 40 outputs switching control signals to the inverters 41 and 42. The motor ECU 40 establishes communication with the hybrid electronic control unit 70 to drive and control the motors MG1 and MG2 in response to control signals received from the hybrid electronic control unit 70 and to output data regarding the operating conditions of the motors MG1 and MG2 to the hybrid electronic control unit 70 according to the requirements.

The battery 50 is under control and management of a battery electronic control unit (hereafter referred to as battery ECU) 52. The battery ECU 52 inputs signals required for management and control of the battery 50, for example, an inter-terminal voltage from a voltage sensor (not shown) located between terminals of the battery 50, a charge-discharge current from a current sensor (not shown) located in a power line 54 connecting with an output terminal of the battery 50, and a battery temperature Tb from a temperature sensor 51 attached to the battery 50. The battery ECU 52 outputs data regarding the operating conditions of the battery 50 by communication to the hybrid electronic control unit 70 according to the requirements. The battery ECU 52 computes a remaining charge level or current state of charge (SOC) of the battery 50 from integration of the charge-discharge current measured by the current sensor, for the purpose of management and control of the battery 50.

The navigation system 90 has a direction sensor 92 that includes a geomagnetic sensor and a gyroscope, a GPS antenna 94 that receives information on the present position of the vehicle and other relevant data in the form of radio waves from satellites, a touch panel display 96 that displays the information on the present position of the vehicle and allows the operator's entry of various settings and operations, for example, the operator's operations for setting a desired destination, and a system main body 98 that includes a communication port and a recording medium for storage of map information (not shown), such as a DVD or a hard disk. The navigation system 90 is designed to search for a route to the set destination, based on the map information, the present position, and the destination. The navigation system 90 sends information on the present position of the vehicle and zoning information of the present position via its communication port to the hybrid electronic control unit 70 according to the requirements. The navigation system 90 receives commands from the hybrid electronic control unit 70 and shows various pieces of information on the display 96. The terminology 'zoning information' herein represents use districts, for example, residential districts, commercial districts, and industrial districts, set by zoning laws.

The hybrid electronic control unit 70 is constructed as a microprocessor including a CPU 72, a ROM 74 that stores processing programs, a RAM 76 that temporarily stores data, input and output ports (not shown), and a communication port (not shown). The hybrid electronic control unit 70 receives, via its input port, an ignition signal from an ignition switch 80, a gearshift position SP or a current setting position of a gearshift lever 81 from a gearshift position sensor 82, an accelerator opening Acc or the driver's depression amount of an accelerator pedal 83 from an accelerator pedal position sensor 84, a brake pedal position BP or the driver's depression amount of a brake pedal 85 from a brake pedal position sensor 86, a vehicle speed V from a vehicle speed sensor 88, a mode signal M from a fuel consumption priority mode switch 56 turned on in response to the driver's preference to the fuel consumption over the power performance, and a remaining amount of fuel or fuel level RF in a fuel tank (not shown) from a fuel level sensor 58. The hybrid electronic control unit 70 establishes communication with the engine ECU 24, the motor ECU 40, the battery ECU 52, and the navigation system 90 via its communication port to receive and send the diversity of control signals and data from and to the engine ECU 24, the motor ECU 40, the battery ECU 52, and the navigation system 90 as mentioned above.

The hybrid vehicle 20 of the embodiment constructed as described above sets a torque demand to be output to the ring gear shaft 32a or the driveshaft, based on the vehicle speed V and the accelerator opening Acc (corresponding to the driver's depression amount of the accelerator pedal 83), and drives and controls the engine 22 and the motors MG1 and MG2 to ensure output of power demand to the ring gear shaft 32a according to the preset torque demand. There are several drive control modes of the engine 22 and the motors MG1 and MG2. In a torque conversion drive mode, while the engine 22 is driven and controlled to output a required level of power corresponding to the power demand, the motors MG1 and MG2 are driven and controlled to enable all the output power of the engine 22 to be subjected to torque conversion by means of the planetary gear mechanism 30 and the motors MG1 and MG2 and to be output to the ring gear shaft 32a. In a charge-discharge drive mode, the engine 22 is driven and controlled to output a required level of power corresponding to the sum of the power demand and electric power used to charge the battery 50 or discharged from the battery 50. The motors MG1 and MG2 are driven and controlled to enable all or part of the output power of the engine 22, which is equivalent to the power demand with charge or discharge of the battery 50, to be subjected to torque conversion by means of the planetary gear mechanism 30 and the motors MG1 and MG2 and to be output to the ring gear shaft 32a. In a motor drive mode, the motor MG2 is driven and controlled to ensure output of a required level of power corresponding to the power demand to the ring gear shaft 32a, while the engine 22 stops its operation.

The description regards the operations of the hybrid vehicle 20 of the embodiment having the configuration discussed above. Fig. 3 is a flowchart showing a drive control routine that is repeatedly executed by the hybrid electronic control unit 70 at preset time intervals (for example, at every several msec).

On the start of the drive control routine of Fig. 3, the CPU 72 of the hybrid electronic control unit 70 first inputs various data required for control, that is, the accelerator opening Acc from the accelerator pedal position sensor 84, the vehicle speed V from the vehicle speed sensor 88, the mode signal M from the fuel consumption priority mode switch 56, the fuel level RF from the fuel level sensor 58, rotation speeds Nm1 and Nm2 of the motors MG1 and MG2, a rotation speed Ne of the engine 22, the catalyst bed temperature Tcat, an input limit Win and an output limit Wout of the battery 50, and vehicle location information NAV (step S100). The rotation speeds Nm1 and Nm2 of the motors MG1 and MG2 are computed from the rotational positions of the respective rotors in the motors MG1 and MG2 detected by the rotational position detection sensors 43 and 44 and are received from the motor ECU 40 by communication. The rotation speed Ne of the engine 22 is computed from the output signal of the crank position sensor 140 attached to the crankshaft 26 and is received from the engine ECU 24 by communication. The catalyst bed temperature Tcat is specified by the output signal of the catalyst bed temperature sensor 135 and is received from the engine ECU 24 by communication. The input limit Win and the output limit Wout of the battery 50 are set based on the battery temperature Tb of the battery 50 measured by the temperature sensor 51 and the state of charge SOC of the battery 50 and are received from the battery ECU 52 by communication. A concrete procedure of setting the input and output limits Win and Wout of the battery 50 sets base values of the input limit Win and the output limit Wout corresponding to the battery temperature Tb, specifies an input limit correction factor and an output limit correction factor corresponding to the state of charge SOC of the battery 50, and multiplies the base values of the input limit Win and the output limit Wout by the specified input limit correction factor and output limit correction factor to determine the input limit Win and the output limit Wout of the battery 50. Fig. 4 shows variations of the input limit Win and the output limit Wout against the battery temperature Tb. Fig. 5 shows variations of the input limit correction factor and the output limit correction factor against the state of charge SOC of the battery 50. The vehicle location information NAV is received from the navigation system 90 by communication and including the information on the present position of the vehicle and its zoning information.

After the data input, the CPU 72 sets a drive torque demand Tr* to be output to the ring gear shaft 32a or the driveshaft linked with the drive wheels 63a and 63b as a torque required for the hybrid vehicle 20 and an engine power demand Pe* required for the engine 22, based on the input accelerator opening Acc and the input vehicle speed V (step S110). A concrete procedure of setting the drive torque demand Tr* in this embodiment stores in advance variations in drive torque demand Tr* against the accelerator opening Acc and the vehicle speed V as a torque demand setting map in the ROM 74 and reads the drive torque demand Tr* corresponding to the given accelerator opening Acc and the given vehicle speed V from this torque demand setting map. One example of the torque demand setting map is shown in Fig. 6. The engine power demand Pe* is calculated as the sum of a drive power demand Pr* given as the product of the set drive torque demand Tr* and a rotation speed Nr of the ring gear shaft 32a, a charge-discharge power demand Pb* to be charged into or discharged from the battery 50 (negative values represent charging and positive values represent discharging), and a potential loss according to Equation shown at step S110 in the flowchart of Fig. 3. The rotation speed Nr of the ring gear shaft 32a is obtained by multiplying the vehicle speed V by a preset conversion factor k or by dividing the rotation speed Nm2 of the motor MG2 by a gear ratio Gr of the reduction gear 35. The charge-discharge power demand Pb* is set according to the accelerator opening Acc and the state of charge SOC of the battery 50.

It is then determined whether the set engine power demand Pe* exceeds a maximum power Pemax in operation of the engine 22 at a driving point (defined by the combination of a rotation speed Ne and a torque Te) on a reference operation curve (step S120). Fig. 7 shows one example of the reference operation curve. The reference operation curve is determined according to the following procedure. There are infinite combinations of the rotation speed Ne and the torque Te, the product of which is equal to a fixed value of the engine power demand Pe*. An optimum combination of the rotation speed Ne and the torque Te attaining the highest fuel consumption and the highest emission is selected among these infinite combinations. The optimum combination of the rotation speed Ne and the torque Te attaining the highest fuel consumption and the highest emission is successively selected for each of various values of the engine power demand Pe*. A line connecting the optimum combinations selected for the respective values of the engine power demand Pe* is set as the reference operation curve. The driving point on the reference operation curve accordingly represents the combination of the rotation speed Ne and the torque Ne attaining the highest fuel consumption and the best emission. This combination of the rotation speed Ne and the torque Te is regarded as the rotation speed Ne and the torque Te under air-fuel ratio control with a stoichiometric air-fuel ratio (approximately 14.7) set to a target air-fuel ratio. The maximum power Pemax is given as a highest possible output power at the rotation speed Ne of the engine 22 set to a maximum rotation speed Nemax as shown in Fig. 7. A concrete procedure of setting the maximum rotation speed Nemax sets a reference noise level in conformity with the Basic Environment Law or another relevant law, experimentally or otherwise specifies a relation between the rotation speed Ne of the engine 22 and a vehicle exterior noise level of the hybrid vehicle 20, computes a rotation speed Ne corresponding to the reference noise level based on the specified relation, and sets the computed rotation speed Ne to the maximum rotation speed Nemax. The maximum rotation speed Nemax may be varied according to the zoning information on the use district of the present position of the vehicle (residential district, commercial district, or industrial district) included in the vehicle location information NAV received from the navigation system 90. For example, the maximum rotation speed Nemax in the residential districts may be set lower than the maximum rotation speed Nemax in the commercial districts and the industrial districts.

When the engine power demand Pe* is not greater than the maximum power Pemax at step S120, the target rotation speed Ne* and the target torque Te* are set according to the reference operation curve shown in Fig. 7 (step S125). When the engine power demand Pe* exceeds the maximum power Pemax at step S120, on the contrary, the CPU 72 subsequently determines whether a predetermined fuel increase prohibition condition is satisfied (step S130). The fuel increase prohibition condition is satisfied when the mode signal M represents the ON setting of the fuel consumption priority mode switch 56, when the vehicle position information NAV input from the navigation system 90 specifies the residential district as the use district of the present position of the vehicle, when the fuel level RF is lower than a preset threshold value for lighting on a fuel level indicator (not shown), or when the catalyst bed temperature Tcat is lower than a preset activation temperature (for example, 300°C or 350°C) of the catalyst. Upon satisfaction of the fuel increase prohibition condition, the CPU 72 refers to the reference operation curve shown in Fig. 7 and sets the target rotation speed Ne* and the target torque Te* of the engine 22 respectively to the maximum rotation speed Nemax and a maximum torque Temax (step S135). In this case, the target air-fuel ratio used for the air-fuel ratio control of the engine 22 is not set to a rich air-fuel ratio with a view to increasing the amount of fuel injection. Upon failure of the fuel increase prohibition condition, on the other hand, the CPU 72 sets the target rotation speed Ne* of the engine 22 to the maximum rotation speed Nemax (step S140) and sets the target air-fuel ratio (fuel increase parameter) used for the air-fuel ratio control of the engine 22 to a rich air-fuel ratio based on the engine power demand Pe* (step S150). The air-fuel ratio on the reference operation curve shown in Fig. 7 is the stoichiometric air-fuel ratio and accordingly attains the high fuel consumption and the high emission. An engine output power Pe, however, tends to be higher at the richer air-fuel ratio than at the stoichiometric air-fuel ratio. Setting the target air-fuel ratio used for the air-fuel ratio control to the rich air-fuel ratio to increase the amount of fuel injection relative to the amount of intake air enables an increase in engine output power Pe with the rotation speed Ne of the engine 22 kept to the maximum rotation speed Nemax. The rich air-fuel ratio is set corresponding to the engine power demand Pe*. For example, the rich air-fuel ratio may be set corresponding to a rate of the engine power demand Pe* to the maximum power Pemax. Fig. 8 shows a variation in target air-fuel ratio against the rate of the engine power demand Pe* to the maximum power Pemax.

After setting the target rotation speed Ne* and the target torque Te* of the engine 22 at either of steps S125 and S135 or after setting the target rotation speed Ne* and the rich air-fuel ratio used for the air-fuel ratio control of the engine 22 at steps S140 and S150, the CPU 72 calculates a target rotation speed Nm1* of the motor MG1 from the target rotation speed Ne* of the engine 22, the rotation speed Nr (= Nm2/Gr) of the ring gear shaft 32a, and a gear ratio p of the planetary gear mechanism 30 according to Equation (1) given below, while calculating a torque command Tm1* of the motor MG1 from the calculated target rotation speed Nm1* and the current rotation speed Nm1 of the motor MG1 according to Equation (2) given below (step S160). Equation (1) is a dynamic relational expression of the rotation elements included in the planetary gear mechanism 30. Fig. 9 is an alignment chart showing torque-rotation speed dynamics of the respective rotation elements included in the planetary gear mechanism 30. The left axis 'S' represents the rotation speed of the sun gear 31 that is equivalent to the rotation speed Nm1 of the motor MG1. The middle axis 'C' represents the rotation speed of the carrier 34 that is equivalent to the rotation speed Ne of the engine 22. The right axis 'R' represents the rotation speed Nr of the ring gear 32 obtained by multiplying the rotation speed Nm2 of the motor MG2 by the gear ratio Gr of the reduction gear 35. Equation (1) is readily introduced from the alignment chart of Fig. 9. Two upward thick arrows on the axis 'R' in Fig. 9 respectively show a torque that is transmitted to the ring gear shaft 32a when the torque Te* is output from the engine 22 in steady operation at a specific driving point of the target rotation speed Ne* and the target torque Te*, and a torque that is applied to the ring gear shaft 32a via the reduction gear 35 when a torque Tm2* is output from the motor MG2. Equation (2) is a relational expression of feedback control to drive and rotate the motor MG1 at the target rotation speed No1*. In Equation (2), 'k1' in the second term and 'k2' in the third term on the right side respectively denote a gain of the proportional and a gain of the integral term.

$$Nm1^* = Ne^* \cdot (1+\rho)/\rho - Nm2/(Gr \cdot \rho) \quad (1)$$

$$Tm1^* = \text{Previous } Tm1^* + k1(Nm1^* - Nm1) + k2\int(Nm1^* - Nm1)dt \quad (2)$$

After calculation of the target rotation speed Nm1* and the torque command Tm1* of the motor MG1, the CPU 72 calculates a lower torque restriction Tmin and an upper torque restriction Tmax as minimum and maximum torques that may be output from the motor MG2, according to Equations (3) and (4) given below (step S170). The lower torque restriction Tmin is given by dividing a difference between the input limit Win of the battery 50 and power consumption (power generation) of the motor MG1, which is the product of the torque command Tm1* and the input current rotation speed Nm1 of the motor MG1, by the input current rotation speed Nm2 of the motor MG2. The upper torque restriction Tmax is given by dividing a difference between the output limit Wout of the battery 50 and the power consumption (power generation) of the motor MG1 by the input current rotation speed Nm2 of the motor MG2. The CPU 72 then calculates a tentative motor torque Tm2tmp to be output from the motor MG2 from the drive torque demand Tr*, the torque command Tm1* of the motor MG1, and the gear ratio ρ of the planetary gear mechanism 30 according to Equation (5) given below (step S180). The CPU 72 limits the tentative motor torque Tm2tmp to the range between the calculated lower torque restriction Tmin and upper torque restriction Tmax to set a torque command Tm2* of the motor MG2 (step S190). Setting the torque command Tm2* of the motor MG2 in this manner restricts the drive torque demand Tr* to be output to the ring gear shaft 32a or the driveshaft within the range of the input limit Win and the output limit Wout of the battery 50. Equation (5) is readily introduced from the alignment chart of Fig. 9.

$$Tmin = (Win - Tm1^{*} \cdot Nm1) / Nm2 \qquad (3)$$

$$Tmax = (Wout - Tm1^{*} \cdot Nm1) / Nm2 \qquad (4)$$

$$Tm2tmp = (Tr^{*} + Tm1^{*} / \rho) / Gr \qquad (5)$$

After setting the target rotation speed Ne* and the target torque Te* of the engine 22 (or alternatively the target rotation speed Ne* and the target air-fuel ratio set to the rich air-fuel ratio) and the torque commands Tm1* and Tm2* of the motors MG1 and MG2, the CPU 72 sends the target rotation speed Ne* and the target torque Te* (or the target air-fuel ratio set to the rich air-fuel ratio) of the engine 22 to the engine ECU 24 and the torque commands Tm1* and Tm2* of the motors MG1 and MG2 to the motor ECU 40 (step S200) and exits from the drive control routine of Fig. 3. In response to reception of the target rotation speed Ne* and the target torque Te*, the engine ECU 24 performs air-fuel ratio control that drives the throttle valve motor 136 to adjust the throttle valve 124 for intake of a required amount of the air corresponding to the target rotation speed Ne*, while driving the fuel injection valve 126 to inject a required amount of fuel calculated from the required amount of the air and the stoichiometric air-fuel ratio. In response to reception of the target rotation speed Ne* and the target air-fuel ratio set to the rich air-fuel ratio, on the other hand, the engine ECU 24 performs air-fuel ratio control that drives the throttle valve motor 136 to adjust the throttle valve 124 for intake of a required amount of the air corresponding to the target rotation speed Ne*, while driving the fuel injection valve 126 to inject a required amount of fuel calculated from the required amount of the air and the target air-fuel ratio set to the rich air-fuel ratio. The motor ECU 40 receives the settings of the torque commands Tm1* and Tm2* and performs switching control of the switching elements included in the respective inverters 41 and 42 to drive the motor MG1 with the torque command Tm1* and the motor MG2 with the torque command Tm2*.

Once the rotation speed Ne of the engine 22 reaches the maximum rotation speed Nemax, it is not allowed to change the driving point of the engine 22 to a driving point of the higher rotation speed Ne along the reference operation curve in response to a gradual increase in engine power demand Pe*. In the hybrid vehicle 20 of the embodiment described above, in this state, the drive control increases the amount of fuel injection corresponding to the increasing engine power demand Pe*, so as to enhance the output power Pe of the engine 22. This control procedure thus ensures an increase of the output power Pe of the engine 22 corresponding to the increase in engine power demand Pe* even after the rotation speed Ne of the engine 22 reaches its maximum rotation speed Nemax. The maximum rotation speed Nemax is determined according to the noise level, which depends upon the operation of the engine 22. The drive control of this embodiment attains the required increase of the output power Pe of the engine 22, while desirably restricting the noise level. Upon satisfaction of the fuel increase prohibition condition, the engine 22 is driven at the driving point on the reference operation curve. This ensures the high emission and the high fuel consumption. In the ON setting of the fuel consumption priority mode switch 56, the increase in amount of fuel injection is prohibited because of the driver's preference to the fuel consumption over the power performance. In the residential districts, the increase in amount of fuel injection is prohibited to prevent the environmental load from being heightened by the emission. At the low fuel level RF, the increase in amount of fuel injection is prohibited to extend the traveling distance with the remaining fuel. At the catalyst bed temperature Tcat lower than the activation temperature of the catalyst, the increase in amount of fuel injection is prohibited since the rich content of the fuel-derived component may cause insufficient emission control.

The embodiment discussed above is to be considered in all aspects as illustrative and not restrictive. There may be many modifications, changes, and alterations without departing from the scope or spirit of the main characteristics of the present invention.

In the hybrid vehicle 20 of the embodiment described above, there is no specific limitation of the engine power demand Pe* in the air-fuel ratio control of setting the target air-fuel ratio to the rich air-fuel ratio and increasing the amount of fuel injection to enhance the output power Pe of the engine 22 at the rotation speed Ne of the engine 22 kept to the maximum rotation speed Nemax. Some limitation may, however, be set for the engine power demand Pe*. In this state, since the rotation speed Ne of the engine 22 is kept constant regardless of the increase in output power Pe of the engine 22, the rotation of the engine 22 is controlled with the torque Tm1 of the motor MG1. This leads to an increase in amount of charge into the battery 50. The limitation of the engine power demand Pe* desirably prevents the amount of charge into the battery 50 from exceeding its input limit Win. One typical procedure for such limitation determines whether the engine power demand Pe* exceeds a difference (Pr*-Win) given as the result of subtraction of the input limit Win (a negative value, see Fig. 3) from the drive power demand Pr* and, in the case of the engine power demand Pe* exceeding the difference, sets a guard to restrict the engine power demand Pe* to the difference (Pr*-Win). This arrangement effectively prevents overcharge of the battery 50.

In the hybrid vehicle 20 of the embodiment described above, when the engine power demand Pe* is not greater than the maximum power Pemax, the engine 22 is driven at the driving point on the reference operation curve. Even in this state, in response to an abrupt increase of the accelerator opening Acc by the driver's depression of the accelerator pedal 83, one modified flow of the drive control may set the target air-fuel ratio to the rich air-fuel ratio to increase the output power Pe of the engine 22.

In the hybrid vehicle 20 of the embodiment, the power of the motor MG2 is converted by the reduction gear 35 and is output to the ring gear shaft 32a. The technique of the invention may be applicable to a hybrid vehicle 120 of a modified structure shown in Fig. 10. In the hybrid vehicle 120 of Fig. 10, the power of the motor MG2 is connected to another axle (an axle linked with wheels 64a and 64b) that is different from the axle connecting with the ring gear shaft 32a (the axle linked with the drive wheels 63a and 63b).

In the hybrid vehicle 20 of the embodiment, the power of the engine 22 is transmitted via the planetary gear mechanism 30 to the ring gear shaft 32a or the driveshaft linked with the drive wheels 63a and 63b. The technique of the invention may also be applicable to a hybrid vehicle 220 of another modified structure shown in Fig. 11. The hybrid vehicle 220 of Fig. 11 is equipped with a pair-rotor motor 230. The pair-rotor motor 230 includes an inner rotor 232 connected to the crankshaft 26 of the engine 22 and an outer rotor 234 connected to a driveshaft for power output to the drive wheels 63a and 63b. The pair-rotor motor 230 transmits part of the output power of the engine 22 to the driveshaft, while converting the residual engine output power into electric power.

The above embodiment regards application of the invention to the hybrid vehicle 20. The technique of the invention is, however, not restricted to the power output apparatus mounted on such a hybrid vehicle but is also applicable to the power output apparatus with the function of air-fuel ratio control mounted on any of various automobiles and other vehicles as well as other moving bodies, such as boats and ships and aircraft, and to the power output apparatus with the function of air-fuel ratio control built in any of stationary equipment like construction machinery. Another application of the invention is a control method of the power output apparatus.

The present application claims the benefit of priority from Japanese Patent Application No. 2005-365433 filed on December 19, 2005, the entire contents of which are incorporated herein by reference.

## Industrial Applicability

The technique of the invention is preferably applied to the auto-related industries including general cars, buses, and trucks, as well as to the transport vehicle-related industries including trains, boats and ships, and aircraft, the heavy equipment-related industries including construction equipment and machinery, and the agricultural machinery-related industries.

## Claims

**1.** A power output apparatus that outputs power to a driveshaft, the power output apparatus comprising:

an internal combustion engine;
an electric power-mechanical power input output structure that is connected to an output shaft of the internal combustion engine and to the driveshaft and outputs at least part of output power of the internal combustion engine to the driveshaft through input and output of electric power and mechanical power;
a motor that inputs and outputs power to and from the driveshaft;
an accumulator unit that transmits electric power from and to the electric power-mechanical power input output structure and the motor;

a driveshaft power demand setting module that sets a driveshaft power demand required for the driveshaft;
an internal combustion engine power demand setting module that sets an internal combustion engine power demand required for the internal combustion engine, based on a state of the accumulator and the set driveshaft power demand; and
a controller that, when a rotation speed of the internal combustion engine reaches a preset maximum rotation speed and when the set internal combustion engine power demand exceeds a predetermined maximum power, sets a fuel increase parameter based on the set internal combustion engine power demand and controls the internal combustion engine, the electric power-mechanical power input output structure, and the motor to inject an amount of fuel corresponding to the set fuel increase parameter and to output a power to the driveshaft according to the set driveshaft power demand while keeping the rotation speed of the internal combustion engine unchanged, where the maximum power represents a highest possible power output from the internal combustion engine and is determined according to the maximum rotation speed and a reference operation curve obtained in air-fuel ratio control with an air-fuel ratio equal to or close to a stoichiometric air-fuel ratio.

**2.** The power output apparatus in accordance with claim 1, wherein the maximum rotation speed is determined according to a noise level, which depends upon operation of the internal combustion engine.

**3.** The power output apparatus in accordance with either one of claims 1 and 2, wherein in the case of a requirement for increasing the amount of fuel after the rotation speed of the internal combustion engine reaches the preset maximum rotation speed, the controller increases the amount of fuel to a specific extent of not exceeding a maximum value of the internal combustion engine power demand set according to an input limit of the accumulator.

**4.** The power output apparatus in accordance with any one of claims 1 through 3, wherein the controller does not increase the amount of fuel upon satisfaction of a preset fuel increase prohibition condition, even when the rotation speed of the internal combustion engine reaches the preset maximum rotation speed and when the set internal combustion engine power demand exceeds the predetermined maximum power.

**5.** The power output apparatus in accordance with claim 4, wherein the preset fuel increase prohibition condition is at least one condition selected among a condition that a fuel consumption priority mode is set, a condition that the power output apparatus is driven in a specific district, a condition that a fuel level is in a specific low level range, and a condition that temperature of an emission control catalyst located in an exhaust pathway of the internal combustion engine is lower than a preset catalyst activation temperature.

**6.** The power output apparatus in accordance with any one of claims 1 through 5, wherein the electric power-mechanical power input output structure has: a three shaft-type power input output mechanism that is linked to three shafts, the output shaft of the internal combustion engine, the driveshaft, and a rotating shaft, and inputs and outputs power from and to a residual one shaft based on powers input from and output to any two shafts among the three shafts; and a generator that inputs and outputs power from and to the rotating shaft.

**7.** A vehicle that is equipped with the power output apparatus in accordance with any one of claims 1 to 6 and has an axle mechanically linked with the driveshaft.

**8.** A control method of a power output apparatus, where the power output apparatus has: an internal combustion engine; an electric power-mechanical power input output structure that is connected to an output shaft of the internal combustion engine and to a driveshaft and outputs at least part of output power of the internal combustion engine to the driveshaft through input and output of electric power and mechanical power; a motor that inputs and outputs power to and from the driveshaft; and an accumulator unit that transmits electric power from and to the electric power-mechanical power input output structure and the motor,
the control method comprising

(a) setting a driveshaft power demand required for the driveshaft;
(b) setting an internal combustion engine power demand required for the internal combustion engine, based on a state of the accumulator and the set driveshaft power demand; and
(c) when a rotation speed of the internal combustion engine reaches a preset maximum rotation speed and when the set internal combustion engine power demand exceeds a predetermined maximum power, setting a fuel increase parameter based on the set internal combustion engine power demand and controlling the internal combustion engine, the electric power-mechanical power input output structure, and the motor to inject an amount of fuel corresponding to the set fuel increase parameter and to output a power to the driveshaft according to the set driveshaft power demand while keeping the rotation speed of the internal combustion engine unchanged, where the maximum power represents a highest possible power output from the internal combustion engine and is determined according to the maximum rotation speed and a reference operation curve obtained in air-fuel ratio control with an air-fuel ratio equal to or close to a stoichiometric air-fuel ratio.

FIG.1

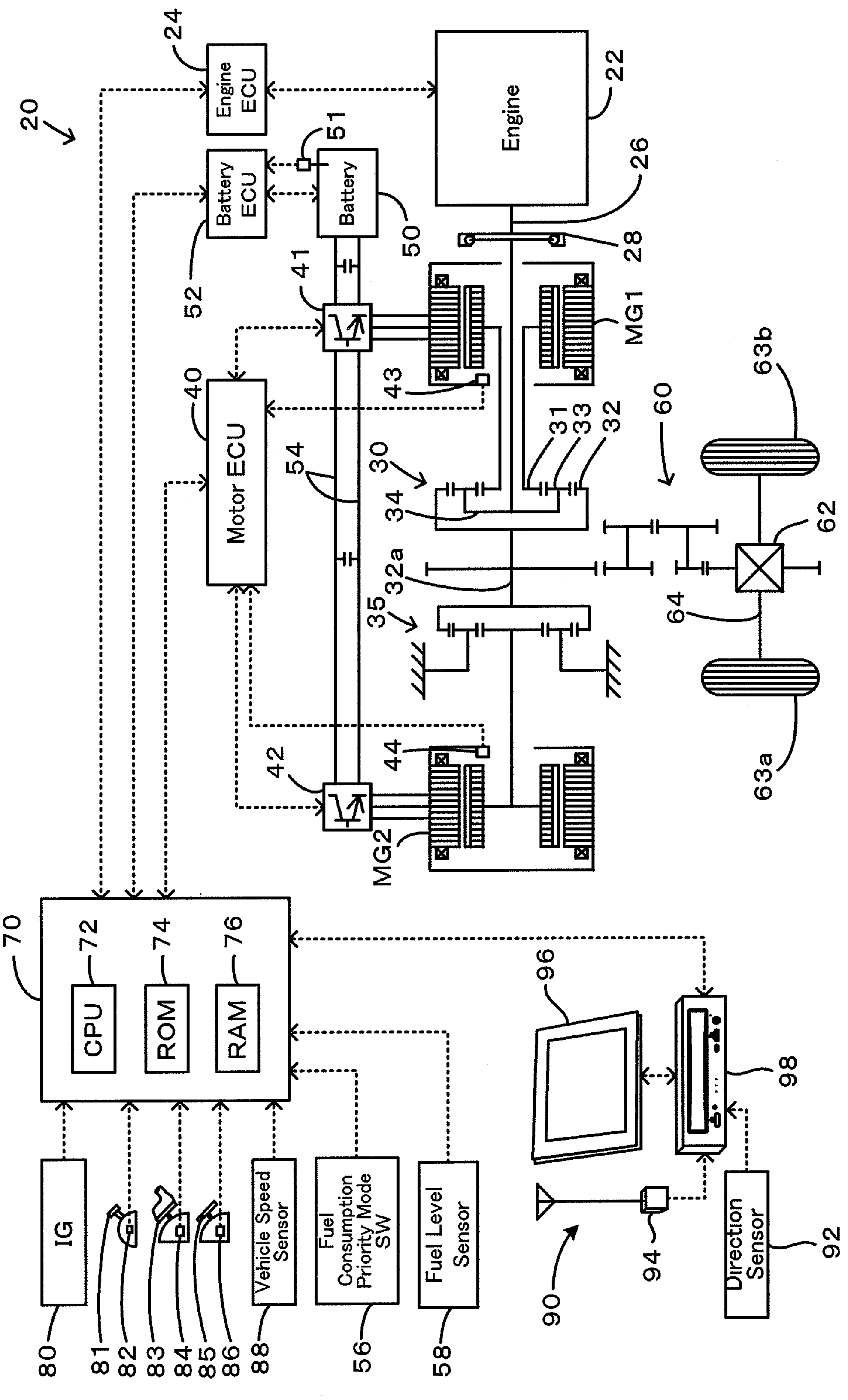
Engine ECU
Battery ECU
Battery
Engine
Motor ECU
MG1
MG2
CPU
ROM
RAM
IG
Vehicle Speed Sensor
Fuel Consumption Priority Mode SW
Fuel Level Sensor
Direction Sensor

FIG.2

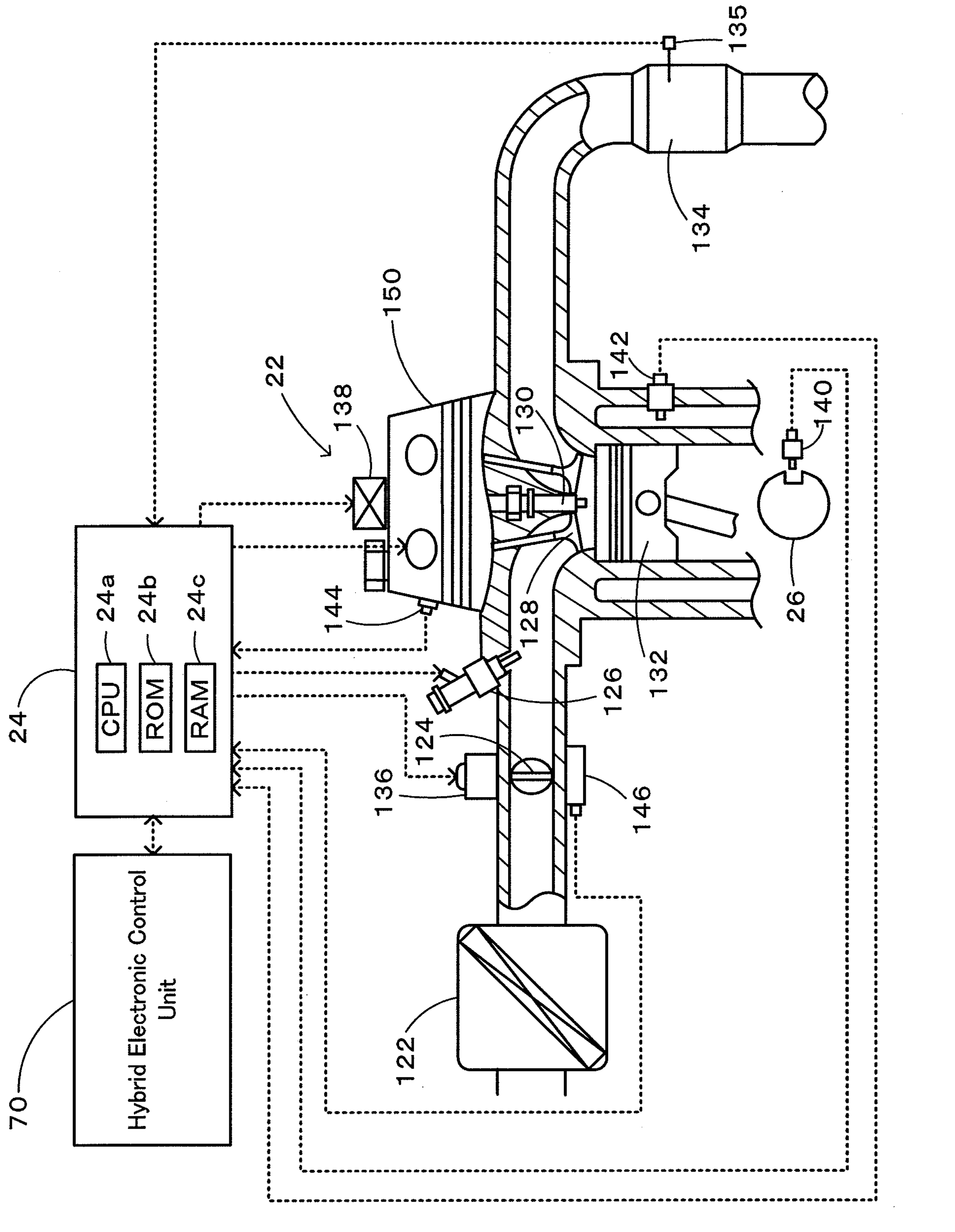
22
24
24a
24b
24c
CPU
ROM
RAM
26
70
Hybrid Electronic Control Unit
122
124
126
128
130
132
134
135
136
138
140
142
144
146
150

FIG.3

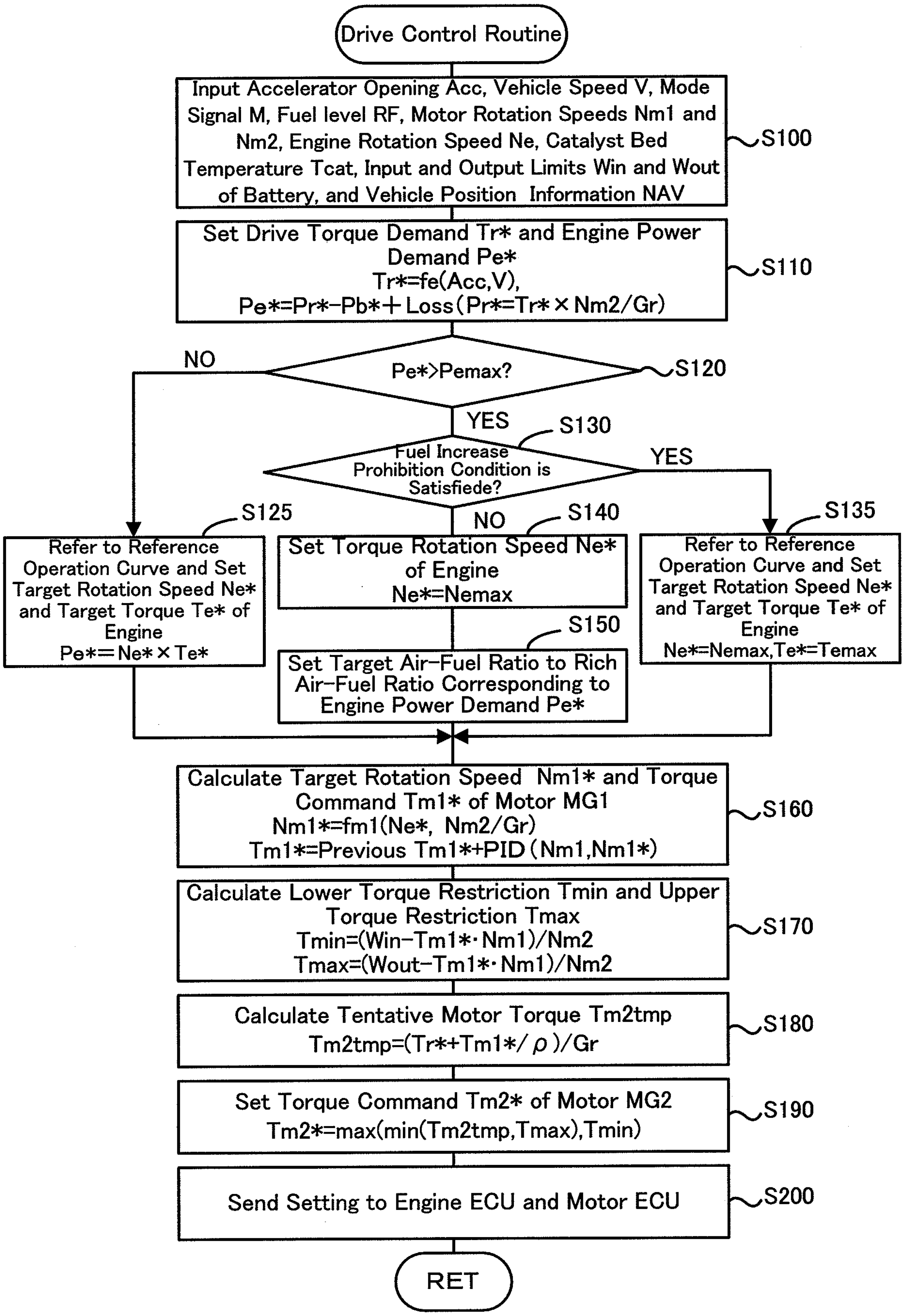
Drive Control Routine
Input Accelerator Opening Acc, Vehicle Speed V, Mode Signal M, Fuel level RF, Motor Rotation Speeds Nm1 and Nm2, Engine Rotation Speed Ne, Catalyst Bed Temperature Tcat, Input and Output Limits Win and Wout of Battery, and Vehicle Position Information NAV
S100
Set Drive Torque Demand Tr* and Engine Power Demand Pe*
Tr*=fe(Acc,V),
Pe*=Pr*−Pb*+Loss(Pr*=Tr*×Nm2/Gr)
S110
Pe*>Pemax?
S120
NO
YES
S130
Fuel Increase Prohibition Condition is Satisfiede?
YES
NO
S125
Refer to Reference Operation Curve and Set Target Rotation Speed Ne* and Target Torque Te* of Engine
Pe*=Ne*×Te*
S140
Set Torque Rotation Speed Ne* of Engine
Ne*=Nemax
S135
Refer to Reference Operation Curve and Set Target Rotation Speed Ne* and Target Torque Te* of Engine
Ne*=Nemax,Te*=Temax
S150
Set Target Air−Fuel Ratio to Rich Air−Fuel Ratio Corresponding to Engine Power Demand Pe*
Calculate Target Rotation Speed Nm1* and Torque Command Tm1* of Motor MG1
Nm1*=fm1(Ne*, Nm2/Gr)
Tm1*=Previous Tm1*+PID(Nm1,Nm1*)
S160
Calculate Lower Torque Restriction Tmin and Upper Torque Restriction Tmax
Tmin=(Win−Tm1*·Nm1)/Nm2
Tmax=(Wout−Tm1*·Nm1)/Nm2
S170
Calculate Tentative Motor Torque Tm2tmp
Tm2tmp=(Tr*+Tm1*/ρ)/Gr
S180
Set Torque Command Tm2* of Motor MG2
Tm2*=max(min(Tm2tmp,Tmax),Tmin)
S190
Send Setting to Engine ECU and Motor ECU
S200
RET

FIG.4

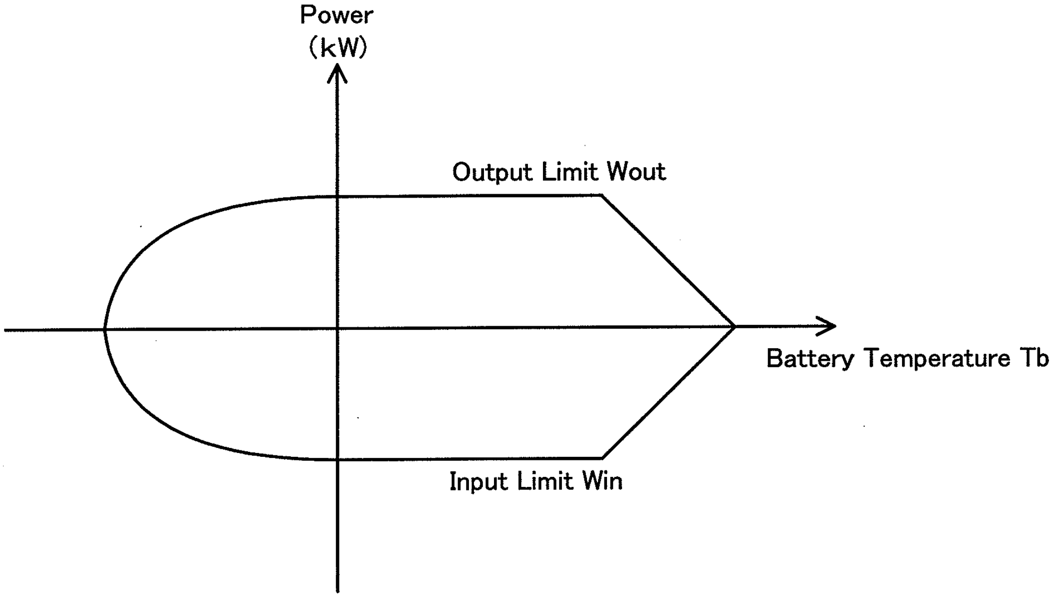
Power
(kW)
Output Limit Wout
Battery Temperature Tb
Input Limit Win

FIG.5

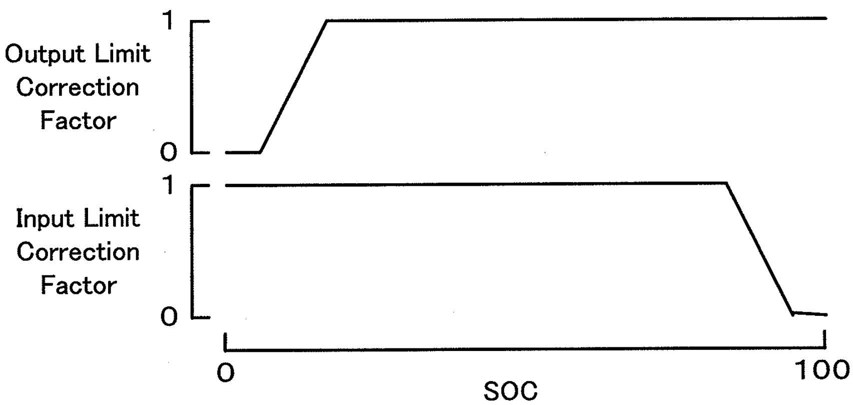
1
Output Limit
Correction
Factor
0
1
Input Limit
Correction
Factor
0
0
100
SOC

FIG.6

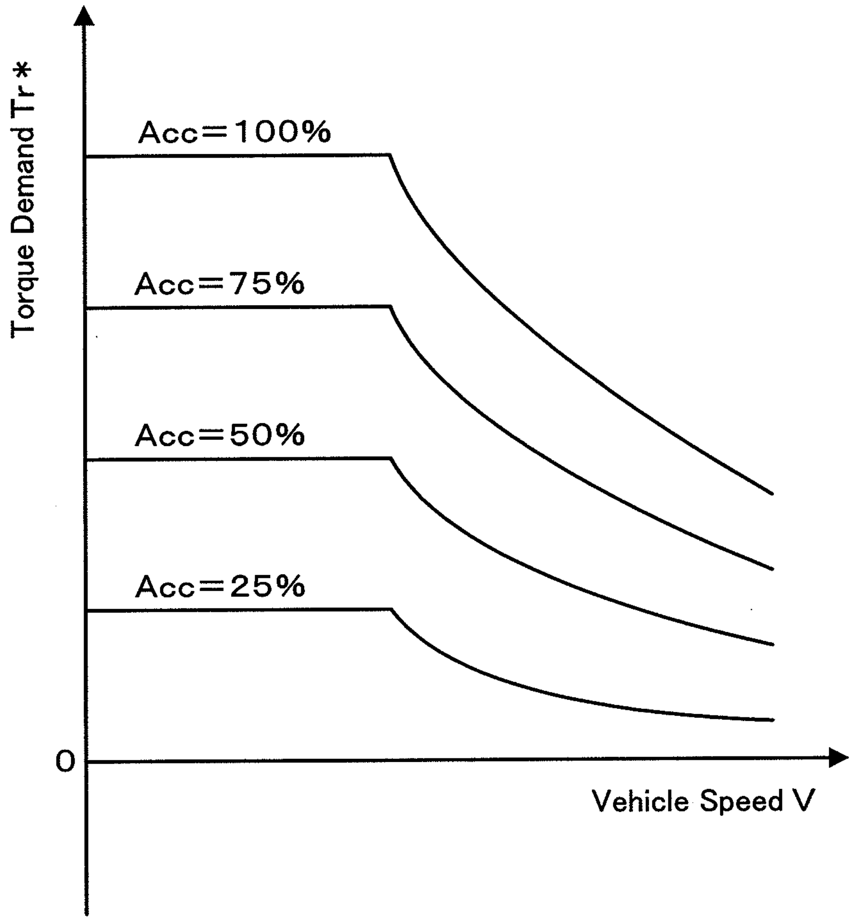

FIG.7

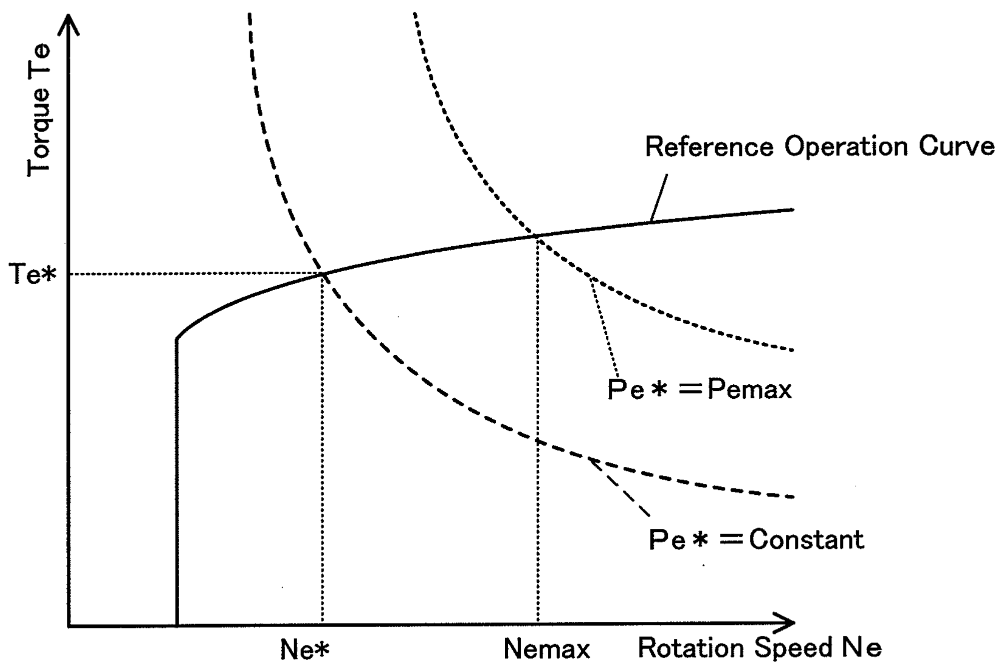
Torque Te
Te*
Reference Operation Curve
Pe＊＝Pemax
Pe＊＝Constant
Ne*
Nemax
Rotation Speed Ne

FIG.8

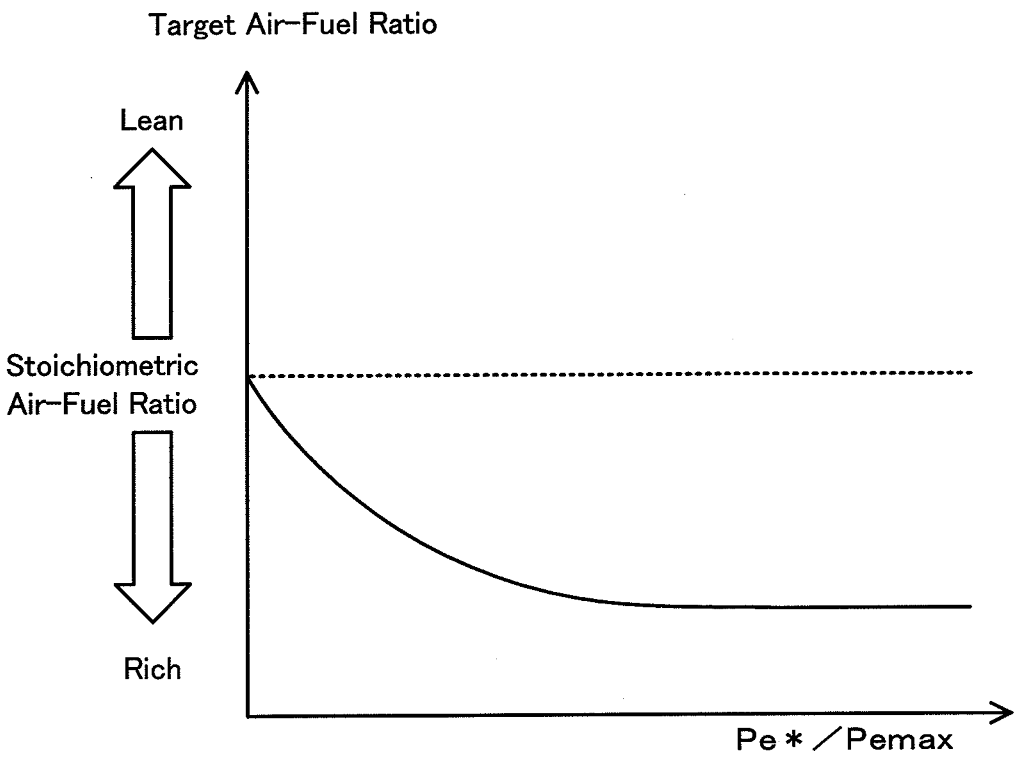
Target Air-Fuel Ratio
Lean
Stoichiometric
Air-Fuel Ratio
Rich
Pe＊／Pemax

FIG.9

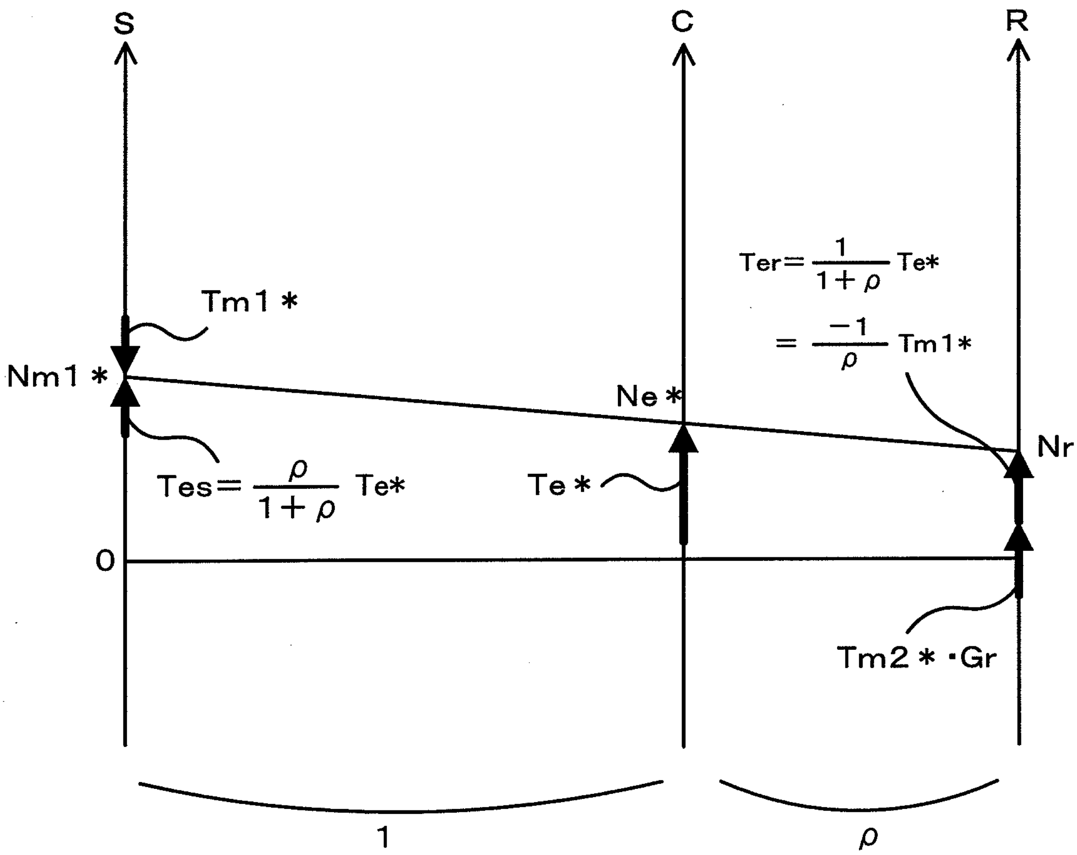


Tes: Torque Division of Engine Torque to Sun Gear Shaft

Ter: Torque Division of Engine Torque to Ring Gear Shaft

FIG.10

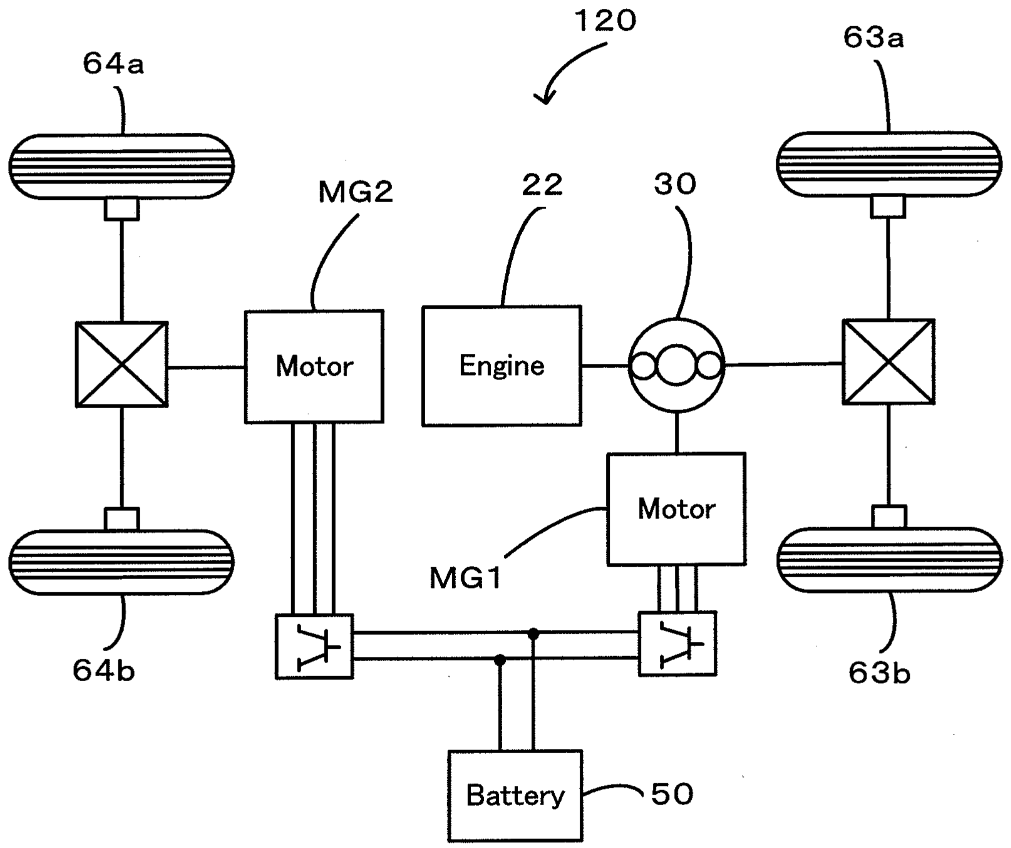
120
64a
63a
MG2
22
30
Motor
Engine
Motor
MG1
64b
63b
Battery
50

FIG.11

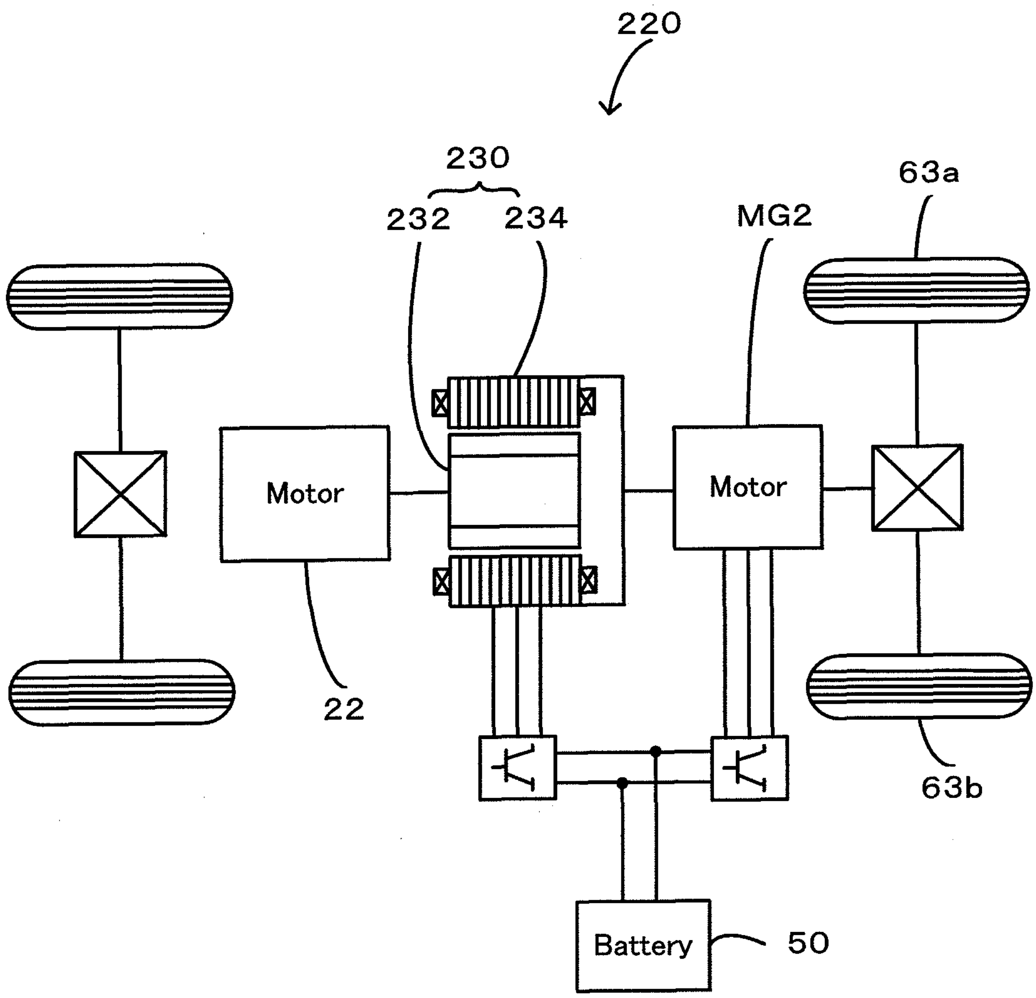

**INTERNATIONAL SEARCH REPORT**

International application No.
PCT/JP2006/325228

A. CLASSIFICATION OF SUBJECT MATTER
*B60W10/06*(2006.01)i, *B60K6/04*(2006.01)i, *B60L11/14*(2006.01)i, *B60W10/08*(2006.01)i, *B60W10/26*(2006.01)i, *B60W20/00*(2006.01)i, *F02D29/02*(2006.01)i, *F02D41/04*(2006.01)i
According to International Patent Classification (IPC) or to both national classification and IPC

B. FIELDS SEARCHED
Minimum documentation searched (classification system followed by classification symbols)
B60W10/06, B60K6/04, B60L11/14, B60W10/08, B60W10/26, B60W20/00, F02D29/02, F02D41/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-117782 A (Toyota Motor Corp.), 27 April, 1999 (27.04.99), Par. Nos. [0049] to [0059]; all drawings (Family: none) | 1-8 |
| Y | JP 10-98805 A (Toyota Motor Corp.), 14 April, 1998 (14.04.98), Par. No. [0065] & US 5907191 A Column 16, lines 7 to 31 & EP 0830969 A2 & EP 0830969 A3 & EP 0830969 B1 | 1-8 |
| Y | JP 8-98319 A (Toyota Motor Corp.), 12 April, 1996 (12.04.96), Par. No. [0027] (Family: none) | 2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 February, 2007 (06.02.07) | 20 February, 2007 (20.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/325228

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-323481 A (Toyota Motor Corp.),<br>17 November, 2005 (17.11.05),<br>Abstract<br>(Family: none) | 3 |
| Y | JP 2005-180331 A (Toyota Motor Corp.),<br>07 July, 2005 (07.07.05),<br>Page 10, lines 7 to 12; page 13, lines 30 to 37<br>(Family: none) | 4,5 |
| Y | JP 2001-238306 A (Toyota Motor Corp.),<br>31 August, 2001 (31.08.01),<br>Par. No. [0032]<br>& US 2001/017470 A1<br>Par. No. [0038]<br>& US 6787932 B2 & EP 1127730 A1<br>& EP 1127730 B1 | 4,5 |
| A | JP 2001-112115 A (Toyota Motor Corp.),<br>20 April, 2001 (20.04.01),<br>Full text; all drawings<br>& EP 1090803 A2 & EP 1090803 A3<br>& US 6637530 B1 | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001112115 A
- JP 2005365433 A